# EUROPÄISCHE PATENTSCHRIFT

(11) **EP 1 141 127 B1**
(45) Veröffentlichungstag und Bekanntmachung des Hinweises auf die Patenterteilung: **05.02.2003**
(21) Anmeldenummer: 99959356.9
(22) Anmeldetag: 29.11.1999
(51) Int. Cl.: C08L 63/00, C09D 163/00, C08L 83/00, C08L 83/04, H01B 3/40

(54) **HYDROPHOBES EPOXIDHARZSYSTEM**
HYDROPHOBIC EPOXIDE RESIN SYSTEM
SYSTEME DE RESINE EPOXY HYDROPHOBE

(30) Priorität: 09.12.1998 CH 244198
(43) Veröffentlichungstag der Anmeldung: 10.10.2001
(73) Patentinhaber: Vantico AG, 4057 Basel (CH)
(72) Erfinder: BEISELE, Christian, D-79424 Auggen (DE); KAINMÜLLER, Thomas, D-79576 Weil am Rhein (DE); TANG, Qian, CH-4104 Oberwil (CH)
(74) Vertreter: Dannappel, Hans-Jochen, Dr.
(86) Internationale Anmeldenummer: EP9909240
(87) Internationale Veröffentlichungsnummer: WO00034388

(56) Entgegenhaltungen:
- EP-A- 0 899 304
- WO-A-98/32198
- DATABASE WPI Section Ch, Week 199106 Derwent Publications Ltd., London, GB; Class A21, AN 1991-039522 XP002130710 & JP 02 305454 A (NITTO DENKO CORP), 19. Dezember 1990 (1990-12-19) in der Anmeldung erwähnt

## Beschreibung

Die vorliegende Erfindung betrifft eine Zusammensetzung enthaltend ein Epoxidharz, verschiedene Polysiloxane und fluorierte Verbindungen, vemetzte Produkte erhältlich durch Härtung einer solchen Zusammensetzung sowie die Verwendung dieser Zusammensetzung als elektrisches Isolationsmaterial.

Epoxidharze werden wegen ihrer guten mechanischen Eigenschaften und ihres hohen spezifischen Widerstands häufig als elektrisches Isoliermaterial verwendet. Für Anwendungen im Freien sind cycloaliphatische Epoxidharze wegen ihrer hohen Witterungsbeständigkeit besonders geeignet. Dabei tritt jedoch vor allem in niederschlagsreichen Regionen mit hoher Luftverschmutzung das Problem auf, dass sich auf der Oberfläche des Isolators eine leitfähige Schmutz/Wasser-Schicht ausbilden kann, was zu Ableitströmen und Lichtbögen führt und eine Schädigung des Isolators bis zum Totalausfall zur Folge haben kann. Auch bei wenig verschmutzten Isolatoren auf Epoxidbasis kann es zum Anstieg der Oberflächenleitfähigkeit kommen, wenn die Oberfläche im Lauf der Zeit durch Verwitterung erodiert und das Wasser solch eine angerauhte Schicht besser benetzen kann.

Wie im US-Patent 3,926,885 offenbart, können Epoxidharzen hydrophobe Eigenschaften verliehen werden durch den Zusatz von Polysiloxan/Polyether-Copolymeren und OH-terminierten Polysiloxanen. Allerdings ist die Haftung dieses Materials auf Metall nicht für alle Anwendungen ausreichend.
In der JP-A 2-305454 werden Epoxidharzmischungen mit hoher Feuchtigkeitsstabilität beschrieben, die neben einem Epoxynovolak und einem Phenolharz geringe Mengen eines cyclischen Dimethylsiloxans enthalten. Zwar wird in diesen Zusammensetzungen die durch Bindung von Wasser an der Oberfläche verursachte Korrosion weitgehend verhindert, ein für die Verwendung als Isolator ausreichender Hydrophobie-Effekt wird jedoch mit solchen Systemen nicht erzielt.
In der WO98/32138 wird ein als elektrisches Isolationsmaterial geeignetes Harzsystem beschrieben, basierend auf härtbaren Mischungen von Epoxidharzen und speziellen, endständige Glycidylgruppen aufweisende, Silikonoligomeren. Durch die Härtung werden die Silikonoligomere zu Teilen der sich bildenden, vernetzten, Struktur, wodurch bekannte Eigenschaften von Silikonen, wie Hydrophobie und gute Bewitterungsbeständigkeit, auf das gehärtete Material übertragen werden können. Nachteilig ist die Verwendung von teuren kommerziell erhältlichen Silikonoligomeren und ein schlechter Hydrophobie-Transfer-Effekt.

Es wurde nun gefunden, dass Zusammensetzungen enthaltend ein Epoxidharz, mindestens zwei spezifische Polysiloxane und ein nichtionisches, fluoraliphatisches oberflächenaktives Reagenz lagerstabile Emulsionen ergeben können, die im ausgehärteten Zustand einen ausgeprägten Hydrophobie-Transfer-Effekt und Recoveryeffekt aufweisen.
Gegenstand der vorliegenden Erfindung ist eine Zusammensetzung enthaltend
(a) ein Epoxidharz,
(b) ein OH-terminiertes Polysiloxan,
(c) ein cyclisches Polysiloxan und
(d) ein nichtionisches, fluoraliphatisches oberflächenaktives Reagenz.

Die oben genannten Zusammensetzungen enthalten,
bezogen auf die Gesamtzusammensetzung (a), (b), (c) und (d),
77,0 bis 97,99 Gew.-%, insbesondere 86,0 bis 96,95 Gew.-%, der Komponente (a), 1,0 bis 10,0 Gew.-%, insbesondere 2,0 bis 6,0 Gew.-%, der Komponente (b), 1,0 bis 10,0 Gew.-%, insbesondere 1,0 bis 5,0 Gew.-%, der Komponente (c) und 0,01 bis 3,0 Gew.-%, insbesondere 0,05 bis 3,0 Gew.-%, der Komponente (d),
wobei die Summe der Komponenten (a), (b), (c) und (d) 100 Gew.-% beträgt.

Als Komponente (a) der erfindungsgemäßen Zusammensetzungen eignen sich alle Typen von Epoxiden, die mindestens eine Glycidyl- oder β-Methylglycidylgruppe, eine lineare Alkylenoxidgruppe oder eine Cycloalkylenoxidgruppe enthalten.

Beispiele für geeignete Epoxidharze sind Polyglycidyl- und Poly-(β-methylglycidyl)ether, die durch Umsetzung einer mindestens zwei freie alkoholische und/oder phenolische Hydroxylgruppen pro Molekül enthaltenden Verbindung mit Epichlorhydrin oder β-Methylepichlorhydrin unter alkalischen Bedingungen, oder auch in Gegenwart eines sauren Katalysators mit nachfolgender Alkalibehandlung, erhältlich sind. Geeignete Ausgangsverbindungen zur Herstellung solcher Glycidyl- oder β-Methylglycidylether sind zum Beispiel acyclische Alkohole, wie Ethylenglykol, Diethylenglykol und höhere Poly(oxyethylen)glykole, Propan-1,2-diol und Poly(oxypropylen)glykole, Propan-1,3-diol, Butan-1,4-diol, Poly(oxytetramethylen)glykole, Pentan-1,5-diol, Hexan-1,6-diol, Hexan-2,4,6-triol, Glycerin, 1,1,1-Trimethylolpropan, Pentaerythrit oder Sorbit,
cycloaliphatische Alkohole wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3 und
Alkohole mit aromatischen Kernen, wie N,N-Bis-(2-hydroxyethyl)-anilin und
p,p'-Bis-(2-hydroxyethylamino)-diphenylmethan.
Weitere geeignete Dihydroxyverbindungen zur Herstellung von Glycidyl- oder β-Methylglycidylethern sind einkernige Phenole, wie Resorcin und Hydrochinon, mehrkernige Phenole, wie Bis-(4-hydroxyphenyl)-methan, 4,4-Dihydroxydiphenyl,
Bis-(4-hydroxyphenyl)-sulfon, 1,1,2,2-Tetrakis-(4-hydroxyphenyl)-ethan, 2,2-Bis-(4-hydroxyphenyl)-propan (Bisphenol A) und 2,2-Bis-(3,5-dibrom-4-hydroxyphenyl)-propan, sowie Novolake, beispielsweise Phenol- und Kresoinovolake.

Polyglycidyl- und Poly(β-methylglycidyl)-ester sind erhältlich durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere als Komponente (a) geeignete Epoxide sind Poly-(N-glycidyl)-verbindungen, wie beispielsweise die Produkte, die erhältlich sind durch Dehydrochlorierung der Umsetzungsprodukte von Epichlorhydrin mit mindestens zwei Aminowasserstoffatome enthaltenden Aminen, wie Anilin, n-Butylamin, Bis-(4-aminophenyl)-methan und Bis-(4-methyl-aminophenyl)-methan. Dazu zählen auch Triglycidylisocyanurat sowie N,N'-Diglycidylderivate von cyclischen Alkylenharnstoffen, wie Ethylenharnstoff und 1,3-Propylenharnstoff und Hydantoinen, wie 5,5-Dimethylhydantoin.
Poly-(S-glycidyl)-verbindungen, wie zum Beispiel die Di-S-glycidylderivate von Dithiolen, wie Ethan-1,2-dithiol und Bis-(4-mercaptomethylphenyl)-ether, sind ebenfalls geeignet.

Bevorzugt enthalten die Zusammensetzungen als Komponente (a) ein cycloaliphatisches Epoxidharz oder ein Epoxidierungsprodukt eines natürlichen ungesättigten Öls oder eines Derivates davon.
Der Begriff "cycloaliphatisches Epoxidharz" steht im Rahmen dieser Erfindung für sämtliche Epoxidharze mit cycloaliphatischen Struktureinheiten, d.h. er umfasst sowohl cycloaliphatische Glycidylverbindungen und β-Methylglycidylverbindungen als auch Epoxidharze auf Basis von Cycloalkylenoxiden.
Geeignete cycloaliphatische Glycidylverbindungen und β-Methylglycidylverbindungen sind die Glycidylester und β-Methylglycidylester von cycloaliphatischen Polycarbonsäuren wie Tetrahydrophthalsäure, 4-Methyltetrahydrophthalsäure, Hexahydrophthalsäure, 3-Methylhexahydrophthalsäure und 4-Methylhexahydrophthalsäure.

Weitere geeignete cycloaliphatische Epoxidharze sind die Diglycidylether und
β-Methylglycidylether von cycloaliphatischen Alkoholen, wie 1,2-Dihydroxycyclohexan, 1,3-Dihydroxycyclohexan und 1,4-Dihydroxycyclohexan, 1,4-Cyclohexandimethanol, 1,1-Bis(hydroxymethyl)cyclohex-3-en, Bis(4-hydroxycyclohexyl)methan, 2,2-Bis(4-hydroxycyclohexyl)propan und Bis(4-hydroxycyclohexyl)sulfon.

Beispiele für Epoxidharze mit Cycloalkylenoxid-Strukturen sind
Bis(2,3-epoxycyclopentyl)ether, 2,3-Epoxycyclopentylglycidylether,
1,2-Bis(2,3-epoxycyclopentyl)ethan, Vinylcyclohexendioxid, 3,4-Epoxycyclohexylmethyl-3',4'-epoxycyclohexancarboxylat, 3,4-Epoxy-6-methylcyclohexylmethyl-3',4'-epoxy-6'methylcyclohexancarboxylat, Bis(3,4-epoxycyclohexylmethyl)adipat und
Bis(3,4-epoxy-6-methylcyclohexylmethyl)adipat.

Bevorzugte cycloaliphatische Epoxidharze sind Bis(4-hydroxycyclohexyl)methandiglycidylether, 2,2-Bis(4-hydroxycyclohexyl)propandiglycidylether, Tetrahydrophthalsäurediglycidylester, 4-Methyltetrahydrophthalsäurediglycidylester, 4-Methylhexahydrophthalsäurediglycidylester, und insbesondere Hexahydrophthalsäurediglycidylester und 3,4-Epoxycyclohexylmethyl-3'4'-epoxycyclohexancarboxylat.

Als Komponente (a) lassen sich in den erfindungsgemäßen Zusammensetzungen zudem Epoxidierungsprodukte von ungesättigten Fettsäureestem einsetzen. Vorzugsweise werden epoxidhaltige Verbindungen eingesetzt, die sich von Mono- und Polyfettsäuren mit 12 bis 22 C-Atomen und einer lodzahl zwischen 30 und 400 ableiten, wie zum Beispiel Lauroleinsäure, Myristoleinsäure, Palmitoleinsäure, Ölsäure, Gadoleinsäure, Erukasäure, Ricinolsäure, Linolsäure, Linolensäure, Elaidinsäure, Likansäure, Arachidonsäure und Clupanodonsäure. Geeignet sind beispielsweise die Epoxidierungsprodukte von Sojaöl, Leinöl, Perillaöl, Tungöl, Oiticiaöl, Safloröl, Mohnöl, Hanföl, Baumwollsamenöl, Sonnenblumenöl, Rapsöl, mehrfach ungesättigte Triglyceride, Triglyceride aus Euphorbia-Gewächsen, Erdnussöl, Olivenöl, Olivenkernöl, Mandelöl, Kapoköl, Haselnussöl, Aprikosenkemöl, Bucheckernöl, Lupinenöl, Maisöl, Sesamöl, Traubenkernöl, Lallemantiaöl, Ricinusöl, Heringöl, Sardinenöl, Menhadenöl, Walöl, Tallöl und davon abgeleitete Derivate.
Weiterhin sind auch höher ungesättigte Derivate geeignet, die durch nachträgliche Dehydrierungsreaktionen dieser Öle erhalten werden können.

Die olefinischen Doppelbindungen der ungesättigten Fettsäurereste der oben angegebenen Verbindungen lassen sich nach bekannten Methoden epoxidieren, beispielsweise durch Reaktion mit Wasserstoffperoxid, gegebenenfalls in Gegenwart eines Katalysators, einem Alkylhydroperoxid oder einer Persäure, wie zum Beispiel Perameisensäure oder Peressigsäure.
Im Rahmen der Erfindung können sowohl die vollständig epoxidierten Öle als auch die partiell epoxidierten Derivate, die noch freie Doppelbindungen enthalten, als Komponente (a) verwendet werden.

Besonders bevorzugt als Komponente (a) sind epoxidiertes Sojaöl und epoxidiertes Leinöl.

Die OH-terminierten Polysiloxane gemäss Komponente (b) können nach bekannten Methoden hergestellt werden, beispielsweise durch Hydrolyse der entsprechenden Organochlorsilane und anschliessende Polykondensation der Silanole. Hierbei enstehen in der Regel Polysiloxangemische mit Molekularmassen von 1'000-150'000 g/mol. Eine Reihe solcher OH-terminierten Polysiloxane sind im Handel erhältlich.

In den erfindungsgemässen Zusammensetzungen werden bevorzugt flüssige Polysiloxane verwendet.

Vorzugsweise wird ein Polysiloxan der Formel I eingesetzt 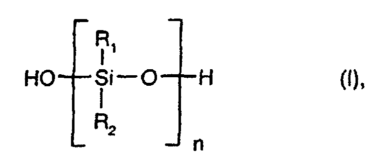 worin R₁ und R₂ unabhängig voneinander C₁-C₁₈-Alkyl, C₅-C₁₄-Aryl oder C₆-C₂₄-Aralkyl bedeuten und n für einen Durchschnittswert von 3 bis 60, insbesondere von 4 bis 20 steht. Alkyl umfaßt beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.
Aryl als R₁ oder R₂ enthält bevorzugt 6 bis 14 C-Atome. Es kann sich dabei beispielsweise um Phenyl, Tolyl, Pentalinyl, Indenyl, Naphtyl, Azulinyl und Anthryl handeln.
Aralkyl als R₁ oder R₂ enthält bevorzugt 7 bis 12 C-Atome und besonders bevorzugt 7 bis 10 C-Atome. Es kann sich zum Beispiel um Benzyl, Phenylethyl, 3-Phenylpropyl,
α-Methylbenzyl, 4-Phenylbutyl oder α,α-Dimethylbenzyl handeln.

Besonders bevorzugt sind Polysiloxane der Formel I, worin R₁ und R₂ unabhängig voneinander Methyl, Ethyl oder Phenyl bedeuten.

Insbesondere bevorzugt als Komponente (b) sind Polysiloxane der Formel I, worin R₁ und R₂ für Methyl stehen und n = 4 bis 20.

Die cyclischen Polysiloxane gemäss Komponente (c) sind dem Fachmann ebenfalls bekannt und können nach bekannten Methoden hergestellt werden.

Vorzugsweise wird als Komponente (c) ein cyclisches Polysiloxan der Formel II eingesetzt 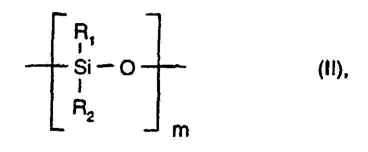 worin R₁ und R₂ unabhängig voneinander C₁-C₁₈-Alkyl, C₅-C₁₄-Aryl oder C₆-C₂₄-Aralkyl bedeuten und m eine ganze Zahl von 3 bis 12 ist.
Alkyl, Aryl und Aralkyl in Formel (II) haben die gleiche Ausdeutung wie diejenigen der entsprechenden Gruppen gemäss Formel (I).

Bevorzugt als Komponente (c) sind cyclische Polysiloxane der Formel II, worin R₁ und R₂ unabhängig voneinander Methyl, Ethyl oder Phenyl bedeuten und m eine ganze Zahl von 3 bis 8 ist.

Ganz besonders bevorzugt bedeuten R₁ und R₂ Methyl und m eine ganze Zahl von 6 bis 8. Wie es in J. Am. Chem. Soc. 68, 358 (1946) beschrieben wird, können solche cyclischen Polysiloxane aus dem Produktgemisch isoliert werden, das bei der Hydrolyse der entsprechenden Dialkyl-, Diaryl bzw. Diaralkyldichlorsilane entsteht.
Besonders bevorzugt als Komponente (c) sind die im Handel erhältlichen Verbindungen Octamethylcyclotetrasiloxan (m = 4), Decamethylcyclopentasiloxan (m = 5) und insbesondere Dodecamethylcyclohexasiloxan (m = 6) als auch Hydrolysate von Dimethyldichlorsilan, insbesondere undestillierte Hydrolysate, da diese höhere Anteile an cylischen Polysiloxanen mit der bevorzugten Ringgrösse m = 6 bis 8 aufweisen, also neben Dodecamethylcyclohexasiloxan auch Tetradecamethylcycloheptasiloxan (m = 7) und Hexadecamethylcyclooctasiloxan (m = 8).

Als oberflächenaktives Reagenz in Form der Komponente (d) der erfindungsgemäßen Zusammensetzungen eignen sich Derivate nichtionischer, perfluorierter Polyalkylene, wie perfluorierte Polyoxyalkylene. Bevorzugt sind Verbindungen einer Kombination aus einer perfluorierten aliphatischen Alkyleinheit R_{f} mit einer Kohlenwasserstoffeinheit R, bei der letztere wenigstens eine, bevorzugt sauerstoffhaltige, mono- oder divalente polare funktionelle Gruppe enthält, wie z.B. -OH, -COOH, -COOR, -COO-, -CO-, -O-.

Geeignete Verbindungen sind alkoxylierte, speziell ethoxylierte, perfluorierte Fettsäurederivate wie beispielsweise:

R_{f} -COO-(CH₂CH₂O)ₘ-R (III)

oder

R_{f}-(CH₂CH₂O)ₘ-R (IV),

wobei m = 1 bis 200, R_{f} ein lineares oder verzweigtes perfluoriertes Alkyl mit 2 bis 22 C-Atomen und R = H, C₁-C₆-Alkyl oder R_{f} bedeutet.

Vorzugsweise werden Verbindungen der Formeln (III) oder (IV) verwendet, bei denen die Molmasse entsprechend der theoretischen Summenformel nur 200 bis 10000, insbesondere 300 bis 8000, beträgt.
Bevorzugte Verbindungen sind beispielsweise F₃C-(CF₂)₅-(CH₂CH₂O)-H = 1,1,2,2-Tetrahydroperfluoroctanol (entsprechend der Formel (IV), wobei R_{f} = Perfluoriertes n-Hexyl, m = 1 und R = H bedeutet) oder R_{f} -COO-(CH₂CH₂O)ₘ-R, wobei R_{f} ein lineares perfluoriertes Alkyl mit 16-18 C-Atomen, m = 110-130 und R = H bedeutet.

Diese Verbindungen sind teilweise von mehreren Anbietern im Handel erhältlich, z.B. als ZONYL® Fluorochemical Intermediates (DuPont), z.B. ZONYL® BA-L und BA Fluoroalcohols, oder FLUORAD® Fluorosurfactants (3M), z.B. FLUORAD® FC-431. Weitere erfindungsgemäss einsetzbare oberflächenaktive Verbindungen sind den technischen Bulletins der genannten Hersteller zu entnehmen, zum Beispiel "Technical Information" 233592B (1/94) über ZONYL® Fluorochemical Intermediates (DuPont)."

Es können jeweils eine oder mehrere Verbindungen der Komponenten (a) bis (d) in den erfindungsgemässen Zusammensetzungen eingesetzt werden.

Die erfindungsgemässen Zusammensetzungen können im Prinzip durch kationische Polymerisation des Epoxidharzsystems mit einem Initiatorsystem oder mit allen üblichen Epoxidhärtern gehärtet werden. Vorzugsweise werden jedoch Anhydridhärter verwendet.

Einen weiteren Erfindungsgegenstand bildet daher eine Zusammensetzung enthaltend die oben angegebenen Komponenten (a) bis (d) und zusätzlich als Komponente (e) ein Polycarbonsäureanhydrid.

Dabei kann es sich um lineare aliphatische polymere Anhydride, wie beispielsweise Polysebacinsäurepolyanhydrid oder Polyazelainsäurepolyanhydrid, oder cyclische Carbonsäureanhydride handeln.
Cyclische Carbonsäureanhydride sind besonders bevorzugt.
Beispiele für cyclische Carbonsäureanhydride sind:
Bernsteinsäureanhydrid, Citraconsäureanhydrid, Itaconsäureanhydrid, alkenyl-substituierte Bernsteinsäureanhydride, Dodecenylbernsteinsäureanhydrid, Maleinsäureanhydrid und Tricarballylsäureanhydrid, Maleinsäureanhydridaddukt an Cyclopentadien oder Methylcyclopentadien, Linolsäureaddukt an Maleinsäureanhydrid, alkylierte Endoalkylentetrahydrophthalsäureanhydride, Methyltetrahydrophthalsäureanhydrid und
Tetrahydrophthalsäureanhydrid, wobei von den beiden letzteren die Isomerengemische besonders geeignet sind. Besonders bevorzugt sind Hexahydrophthalsäureanhydrid und Methylhexahydrophthalsäureanhydrid.

Weitere Beispiele für cyclische Carbonsäureanhydride sind aromatische Anhydride, wie beispielsweise Pyromellitsäuredianhydrid, Trimellitsäureanhydrid und Phthalsäureanhydrid.

Auch chlorierte oder bromierte Anhydride, wie z.B. Tetrachlorphthalsäureanhydrid, Tetrabromphthalsäureanhydrid, Dichlormaleinsäureanhydrid und Chlorendic-Anhydrid, können eingesetzt werden.

Die erfindungsgemässen Zusammensetzungen können gegebenenfalls zusätzlich einen Härtungsbeschleuniger (f) enthalten. Geeignete Beschleuniger sind dem Fachmann bekannt. Als Beispiele seien genannt:
Komplexe von Aminen, besonders tertiären Aminen, mit Bortrichlorid oder Bortrifluorid; tertiäre Amine, wie Benzyldimethylamin;
Harnstoffderivate, wie N-4-Chlorphenyl-N',N'-dimethylharnstoff (Monuron);
gegebenenfalls substituierte Imidazole, wie Imidazol oder 2-Phenylimidazol.

Bevorzugte Beschleuniger sind tertiäre Amine, insbesondere Benzyldimethylamin, und Imidazole (z.B. 1-Methylimidazol) für die o.g. Zusammensetzungen, die epoxidierte Öle enthalten.

Die Komponenten (e) und (f) werden in den üblichen wirksamen, d.h. für die Härtung der erfindungsgemässen Zusammensetzungen ausreichenden, Mengen eingesetzt. Das Verhältnis der Komponenten (a) und (e) und gegebenenfalls (f) hängt von der Art der verwendeten Verbindungen, der erforderlichen Härtungsgeschwindigkeit und von den im Endprodukt gewünschten Eigenschaften ab und kann vom Fachmann leicht ermittelt werden. Im allgemeinen werden 0,4 bis 1,6, vorzugsweise 0,8 bis 1,2 Äquivalente Anhydridgruppen pro Epoxidäquivalent eingesetzt.

Das Harzgemisch (a) bis (d) und die Härterkomponente (e), gegebenenfalls zusammen mit dem Beschleuniger (f), werden im allgemeinen getrennt gelagert und erst kurz vor der Applikation gemischt. Wenn das Harzgemisch (a) bis (d) vor der Härtung zwischengelagert werden soll, bedarf das Harzgemisch (a) bis (d) zusätzlicher Hilfsmittel als optionale Komponente (g), um das eine Emulsion bildende Gemisch lagerfähig halten zu können. Als derartige stabilisierende Hilfsmittel können sowohl Emulgatoren (oberflächen- und grenzflächenaktive Verbindungen) als auch Verdickungsmittel (beispielsweise Kieselsäuren, Bentonite, Dibenzylidensorbitol usw.) eingesetzt werden. Diese und deren Verwendung sind dem Fachmann wohlbekannt.

Von den genannten Hilfsmitteln wird bevorzugt hochdisperse Kieselsäure verwendet. Besonders eignen sich hochdisperse, hydrophile, unbehandelte Kieselsäuren. Diese sind im Handel z.B. als Aerosil® erhältlich. Die effektiven Mengen an Kieselsäure liegen im Bereich von 0,01 bis 3,5, vorzugsweise von 0,05 bis 3,0 Gew.-%, bezogen auf die Summe der Komponenten (a) bis (d) und die mittlere Grösse der Primärteilchen beträgt zweckmässig etwa 12 nm.

Gegenstand der Erfindung sind daher auch lagerstabile Zusammensetzungen, erhältlich durch Zugabe stabilisierender Hilfsmittel wie Emulgatoren als auch Verdickungsmitteln. Anstelle der Härterkomponente (e), gegebenenfalls zusammen mit einem Beschleuniger (f), kann das Harzgemisch (a) bis (d) als Komponente (e) ein Initiatorensystem für die kationische Polymerisation des Epoxidharzes enthalten.
Als Initiatorsystem für die kationische Polymerisation der Epoxidharze verwendet man beispielsweise thermisch aktivierbare Initiatoren, wie thermisch aktivierbare Oniumsalze, Oxoniumsalze, Jodoniumsalze, Sulfoniumsalze, Phosphoniumsalze oder quartäre Ammoniumsalze, die keine nucleophile Anionen enthalten. Solche Initiatoren und deren Anwendung sind bekannt. Beispielsweise werden im US-Patent 4,336,363, in der EP-A-0 379 464 oder in der EP-A-0580 552 spezifische Sulfoniumsalze als Härtungsmittel für Epoxidharze offenbart. Im US-Patent 4,058,401 werden neben bestimmten Sulfoniumsalzen auch die entsprechenden Salze des Tellurs und Selens beschrieben.

Quaternäre Ammoniumsalze als thermisch aktivierbare Initiatoren, werden beispielsweise in der EP-A 0 066 543 und in der EP-A-0 673 104 offenbart. Hierbei handelt es sich um Salze von aromatisch-heterocyclischen Stickstoffbasen mit nicht-nucleophilen, beispielsweise komplexen Halogenid-Anionen, wie BF₄⁻, PF₆⁻, SbF₆⁻, SbF₅(OH)⁻ und AsF₆⁻.

Besonders bevorzugt verwendet man als quartäres Ammoniumsalz N-Benzylchinoliniumhexafluoroantimonat.
Bei der Verwendung der quartären Ammoniumsalze ist es zweckmässig ausserdem einen thermischen Radikalbildner, wie beispielsweise Pinakole und deren Ether, Ester oder Silylderivate einzusetzen. Diese Verbindungen sind bekannt und können nach bekannten Verfahren hergestellt werden.

Bevorzugt werden als thermische Radikalbildner die Pinakole, wie Acetophenonpinakole oder insbesondere 1,1,2,2-Tetraphenyl-1,2-ethandiol (Benzpinakol) eingesetzt.

Insbesondere verwendet man als thermisch aktivierbaren Initiator N-Benzylchinoliniumhexafluoroantimonat zusammen mit 1,1,2,2-Tetraphenyl-1,2-ethandiol, bevorzugt in einem Molverhältnis von etwa 1:1.

Die Aktivierungstemperatur der kationischen Initiatoren liegt im allgemeinen oberhalb der Raumtemperatur, vorzugsweise im Bereich zwischen 60 bis 180 °C, insbesondere zwischen 90 bis 150°C.
Die Menge des im kationisch härtbaren Epoxidharz enthaltenen kationischen Initiators beträgt im allgemeinen 0,05 bis 30 Gew.-%, vorzugsweise 0,5 bis 15 Gew.-%, bezogen auf die Menge des kationisch polymerisierbaren Epoxidharzes.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere.
Geeignete Zähigkeitsvermittler sind beispielsweise in der EP-A-0 449 776 beschrieben. Sie werden bevorzugt in einer Menge von 1 bis 20 Gew.-%, bezogen auf die Gesamtmenge Epoxidharz in der Zusammensetzung eingesetzt.

Ausserdem können die härtbaren Mischungen neben den bereits erwähnten weitere Füllstoffe enthalten, wie beispielsweise Metallpulver, Holzmehl, Glaspulver, Glaskugeln, Halbmetall- und Metalloxide, wie zum Beispiel SiO₂ (Quarzsand, Quarzmehl, silanisiertes Quarzmehl, Quarzgutmehl, silanisiertes Quarzgutmehl), Aluminiumoxid, Titanoxid und Zirkoniumoxid, Metallhydroxide, wie Mg(OH)₂, Al(OH)₃, silanisiertes Al(OH)₃ und ALO(OH), Halbmetall- und Metallnitride, wie zum Beispiel Siliziumnitrid, Bomitride und Aluminiumnitrid, Halbmetall- und Metallcarbide (SiC und Borcarbide), Metallcarbonate (Dolomit, Kreide, CaCO₃), Metallsulfate (Baryt, Gips), Gesteinsmehle, wie z.B. von Hydromagnesit und Huntit, und natürliche oder synthetische Mineralien hauptsächlich aus der Silikatreihe, wie zum Beispiel Zeolithe (insbesondere Molekularsiebe), Talkum, Glimmer, Kaolin, Wollastonit und andere. Bevorzugte Füllstoffe sind Quarzmehl, silanisiertes Quarzmehl, Aluminiumhydroxid oder Aluminiumoxid.

Neben den oben erwähnten Additiven können die härtbaren Gemische weitere übliche Zusatzstoffe enthalten, wie z.B. Antioxidantien, Lichtschutzmittel, Flammschutzmittel, kristallwasserhaltige Füllstoffe, Weichmacher, Farbstoffe, Pigmente, Fungizide, Thixotropiemittel, Zähigkeitsverbesserer, Entschäumer, Antistatika, Gleitmittel, Antiabsetzmittel, Benetzungsmittel und Entformungshilfsmittel.
Die erfindungsgemässen Zusammensetzungen können nach bekannten Methoden mit Hilfe bekannter Mischaggregate, wie beispielsweise Rührer (insbesondere Disperser und Supraton® mit hohem Schergefälle), Kneter, Walzen oder Trockenmischern, hergestellt werden. Im Falle von festen Epoxidharzen kann die Dispergierung auch in der Schmelze erfolgen.

Die Härtung der erfindungsgemässen Gemische kann auf bekannte Weise ein- oder mehrstufig vorgenomen werden. Sie erfolgt im allgemeinen durch Erhitzen der Gemische auf Temperaturen zwischen 60 °C und 200 °C, insbesondere zwischen 80 °C und 180 °C.

Gegenstand der Erfindung sind weiterhin die vernetzten Produkte erhältlich durch Härtung einer erfindungsgemässen Zusammensetzung.
Überraschenderweise führt der Zusatz der zwei chemisch verschiedenen SiloxanKomponenten und des oberflächenaktiven Reagenz in den erfindungsgemässen Zusammensetzungen im Vergleich zu den entsprechenden unmodifizierten Systemen (Vergleichsbeispiel 1) praktisch zu keiner oder nur zu einer geringen Verschlechterung der mechanischen und elektrischen Eigenschaften der daraus gewonnenen Produkte.
Der Zusatz von Siliconen führt im allgemeinen zu einer Verschlechterung der Haftungseigenschaften. Die erfindungsgemässen Zusammensetzungen zeigen dennoch unerwarteterweise eine gute Haftung auf Metall, was sich in unverändert guten Umbruchkraft- und Ausreisskraft-Werten ausdrückt. Ebenso wird überraschenderweise ein vergleichsweise sehr gutes Temperaturwechselverhalten an Formkörpern festgestellt, die mit einem erfindungsgemässen System enkapsuliert sind.

Gegenüber unmodifizierten Systemen bietet die Erfindung den Vorteil, dass Spuren der erfindungsgemäss eingesetzten Siloxane auf vorhandene Verschmutzungen auf dem ausgehärteten Material migrieren können. Dadurch wird auch eine anfänglich hydrophile Schmutzschicht hydrophob (Hydrophobie-Transfer). Dies bewirkt, dass Wasser leichter von der Verschmutzung abperlt und nicht wie im Fall des unmodifizierten Systems eine zusammenhängende leitfähige, und damit schädliche, Schmutz/Wasserschicht ausbildet. Dieser Effekt ist sogar überraschenderweise sehr ausgeprägt. Das Wasser rollt wesentlich besser und schneller ab. Überraschenderweise ist auch die Dauerhaftigkeit dieses Effektes sehr gut. Das heisst, dass auch bei mehrfacher Abtragung und Wiederaufbringung der Schmutzschicht der ausgeprägte Hydrophobie-Transfer-Effekt bestehen bleibt.

Auch bei wenig verschmutzten Isolatoren auf Epoxidharzbasis kann es zum Verlust der ursprünglichen Hydrophobie und damit zum Anstieg der Oberflächenleitfähigkeit kommen. Grund sind Mikroentladungen die beispielsweise von einzelnen Regentropfen auf der Isolatoroberfläche verursacht werden können.
Gegenüber unmodifizierten Systemen (Vergleichsbeispiel 1) besteht ein weiterer Vorteil der voliegenden Erfindung darin, dass mit den vorliegenden Systemen überraschenderweise die Wiedererlangung der Hydrophobie nach einem solchem erzwungenen Verlust stattfinden kann. Das bedeutet, dass die ursprüngliche Hydrophobie binnen Stunden bis wenigen Tagen wieder hergestellt ist ("Recovery"-Effekt).
Dadurch sind die erfindungsgemässen Systeme mit ihren ausgezeichneten Hydrophobieeigenschaften in Form eines sehr guten und zugleich dauerhaften Hydrophobie-Transfer-Effektes in Kombination mit einem sehr guten Recovery-Effekt und guten Temperaturwechseleigenschaften zur Anwendung als Isolationsmaterial für Aussenanwendungen in klimatisch schwierigen Einsatzgebieten prädestiniert.

Die erfindungsgemässen Zusammensetzungen eignen sich besonders als Giessharze, Giesmassen ("structural casting"), Laminierharze, Pressmassen ("epoxy moulding compounds"), Beschichtungsmassen sowie insbesondere als elektrische Isoliermassen.

Die Verwendung der erfindungsgemässen Zusammensetzungen als elektrisches Isolationsmaterial stellt einen weiteren Erfindungsgegenstand dar.
In den nachfolgenden Beispielen werden die folgenden kommerziell erhältlichen Substanzen eingesetzt:

| | |
|---|---|
| Epoxidharz 1: | flüssiger Hexahydrophthalsäurediglycidylester; Epoxidgehalt: 5,6 bis 6,2 val/kg ("CY 184", Ciba Spezialitäten Chemie) |
| ESO | epoxidiertes Sojaöl; Epoxidgehalt: 4,10 bis 4,20 val/kg; ("Reoplast", Witco) |
| ELO | epoxidiertes Leinöl; Epoxidgehalt: 5,50 bis 5,65 val/kg: ("Merginat", Harburger Chemie) |
| Härter 1 | Härtermischung aus 70 Gew.-Teilen Hexahydrophthalsäureanhydrid und 30 Gew.-Teilen Methylhexahydrophthalsäureanhydrid |
| W 12: | unbehandeltes Quarzmehl (Quarzwerke Frechen) |
| W 12 EST: | mit Epoxysilan vorbehandeltes Quarzmehl (Quarzwerke Frechen) |
| Polysiloxan 1: | OH-terminiertes Polydimethylsiloxan mit einer Viskosität von 5 Pa·s ("NG200-5000", Wacker) |
| Polysiloxan 2: | Mischung aus linearen OH-terminierten (≤ 40%) Polydimethylsiloxanen und cyclischen Dimethylsiloxanen (≥ 60%) mit einer Viskosität von 5 bis 20 Pa·s ("Dimethylmethanolysat", GE-Bayer AG) |
| Fluorad: | nichtionischer perfluorierter aliphatischer polymerer Ester (ethoxylierte perfluorierte Fettsäure) ("Fluorad FC 431", 3M) |
| BDMA | Benzyldimethylamin |
| 1-MI | 1-Methylimidazol |
| Aerosil | hydrophile, hochdisperse Kieselsäure ("Aerosil 200", Degussa) |

### Herstellungsbeispiele

### Vergleichsbeispiel 1:

In einem Mischgerät mit Flügelrührwerk werden 1000 g Epoxidharz 1, 900 g Härter 1, 5,0 g BDMA und 2700 g Quarzmehl W 12 EST innerhalb von 30 min bei 60 °C mittels eines Mischers mit Flügelrührwerk vermischt und anschliessend bei ca. 10 mbar kurz entgast.
Die Zusammensetzung wird dann 6 h bei 80 °C und 10 h bei 140 °C gehärtet. Die Eigenschaften des gehärteten Produkts sind in Tabelle 1 zusammengefasst.

### Erfindungsbeispiel 1:

In einem Mischgerät mit Disperserscheibe werden 9050 g Epoxidharz 1, 200 g Polysiloxan 1, 500 g Polysiloxan 2 und 100 g Fluorad bei Raumtemperatur in 10 Minuten bei 3750 U/min gemischt. Anschliessend werden 150 g Aerosil der Mischung zugegeben und bei Raumtemperatur innerhalb einer Stunde bei 3750 U/min vermischt. Dabei entsteht eine weisse, lagerstabile Emulsion.
1000 g der so hergestellten Harzvormischung wird mit 814,5 g Härter 1, 4,5 g BDMA und 2578,1 g Quarzmehl W 12 EST innerhalb von 30 min bei 60 °C mittels eines Mischers mit Flügelrührwerk vermischt und anschliessend bei ca. 10 mbar kurz entgast.
Die Zusammensetzung wird dann 6 h bei 80 °C und 10 h bei 140 °C gehärtet. Die Eigenschaften des gehärteten Produkts sind in Tabelle 1 zusammengefasst.

### Erfindungsbeispiel 2:

In einem Mischgerät mit Disperserscheibe werden 6855 g Epoxidharz 1, 200 g Polysiloxan 1, 500 g Polysiloxan 2, 10 g Fluorad, 1143 ESO und 1143 g ELO bei Raumtemperatur in 10 Minuten bei 3750 U/min gemischt. Anschliessend werden 150 g Aerosil der Mischung zugegeben und bei Raumtemperatur innerhalb einer Stunde bei 3750 U/min vermischt. Dabei entsteht eine weisse, lagerstabile Emulsion.
1000 g der so hergestellten Harzvormischung wird mit 806,6 g Härter 1, 2,3 g BDMA, 4,5 g 1-MI und 2567,1 g Quarzmehl W 12 EST innerhalb von 30 min bei 60 °C mittels eines Mischers mit Flügelrührwerk vermischt und anschliessend bei ca. 10 mbar kurz entgast.
Die Zusammensetzung wird dann 6 h bei 80 °C und 10 h bei 140 °C gehärtet. Die Eigenschaften des gehärteten Produkts sind in Tabelle 1 zusammengefasst.

### Erfindungsbeispiel 3:

In einem Mischgerät mit Disperserscheibe werden zunächst 50 g Dibenzylidensorbitol in 9100 g Epoxidharz 1 bei maximal 110° aufgelöst und die Mischung anschliessend auf Raumtemperatur abgekühlt. 200 g Polysiloxan 1, 500 g Polysiloxan 2 und 100 g Fluorad werden nun zugegeben und die Mischung bei Raumtemperatur während 15 Minuten bei 1500 U/min gerührt. Anschliessend werden 50 g Aerosil der Mischung zugegeben und bei Raumtemperatur wird die gesamte Mischung nochmals eine Stunde bei 1500 U/min gerührt. Dabei entsteht eine weisse, lagerstabile Emulsion.
1000 g der so hergestellten Harzvormischung wird mit 820 g Härter 1, 4,5 g BDMA und 3542 g Quarzmehl W 12 EST innerhalb von 30 min bei 60 °C mittels eines Mischers mit Flügelrührwerk vermischt und anschliessend bei ca. 10 mbar kurz entgast.

### Applikationsbeispiel 1:

Mittels des Druckgelierverfahrens werden Stützisolatoren hergestellt. Dazu werden die nach Beispiel 1 und Vergleichsbeispiel 1 analog, jedoch mit 66 Gew.-% Füllgrad, hergestellten ungehärteten Mischungen in eine auf 140 °C aufgeheizte, mit Trennmittel behandelte, Metallform eingespritzt. Nach Gelieren (nach ca. 20 min.) wird das Gussteil aus der Form genommen und 10 h bei 140 °C nachgehärtet. Der aus der erfindungsgemässen Zusammensetzung hergestellte Isolator weist überraschenderweise eine ähnlich hohe Umbruchkraft auf wie der aus der analogen Zusammensetzung ohne Silicon-Additive hergestellte Isolator, während ein Vergleich der Aussreiskräfte beweist, dass das erfindungsgemässe Material noch sehr gut am Insert haftet (siehe Tabelle 1).

### Applikationsbeispiel 2:

Das bessere Verhalten der mit dem erfindungsgemäss modifizierten System hergestellten Isolatoren in Atmosphären mit hoher Luftverschmutzung, insbesondere die besseren Hydrophobieeigenschaften, zeigen die folgenden Versuche:

### 2A: Hydrophobie-Transfer-Effekt

Proben der Erfindungsbeispiele 1 bis 3 werden zum Nachweis des sogenannten "Hydrophobie-Transfer-Effekts" untersucht. Dazu wird auf vier Platten des jeweils mit dem Produkt nach Erfindungsbeispielen 1 bis 3 und Vergleichsbeispiel 1 hergestellten Materials (ohne Verwendung siliconhaltiger Trennmittel hergestellt und nach dem Entformen mit Aceton gereinigt) eine künstliche Verschmutzung aufgebracht. Dazu wird Quarzmehl W 12 aus einer Rüttelapparatur in solch einer Menge pro Fläche auf die Platten aufgebracht, dass anschliessend durch Glattstreichen mittels eines Lineals oder ähnliches eine Fremdschichtdicke von 0,5 mm erzielt werden kann. Zur Überprüfung, ob nun das Material die Hydrophobie auf die eigentlich hydrophile Quarzschicht überträgt, wird in gewissen Zeitabständen aus einer Pipette ein Wassertropfen von 30µl auf die Fremdschicht aufgebracht, dessen Verhalten beobachtet und nach folgendem Schema klassifiziert wird:

| Transferstufen-System (TS) | | | | |
|---|---|---|---|---|
| TS | Eigenschaften | Ebene Probe | Probe, 45° geneigt | Probe zunächst eben, dann 45° geneigt |
| 1 | Kein Hydrophie-Transfer-Effekt (HTE) | Tropfen wird sofort aufgesogen | | |
| 1,5 | | Tropfen wird innerhalb von 2 min aufgesogen | | |
| 2 | schwacher HTE | Tropfen bleibt 2 min stabil | | |
| 2,5 | | | Tropfen bildet "Nasenform" | |
| 3 | mittelmässiger HTE | | Abrollen mit viel FRS-Material | Tropfen bleibt beim Ankippen stabil |
| 3,5 | | | Abrollen mit viel FRS-Material | Tropfen bildet beim Ankippen"Nasenform" |
| 4 | guter HTE | | | Tropfen rollt beim Ankippen mit deutlich sichtbarer Spur ab |
| 4,5 | | | | Tropfen hinterlässt beim Abrollen eine leichte Spur |
| 5 | exzellenter HTE | Tropfen rollt ohne Fremdschichtmaterial ab und "tänzelt" beim leichten Kippen der Probe | | |
| Transferstufen-System: 500 µm dicke Quarzmehlschicht (Quarzmehl W12, Quarzwerke Frechen), Aufsetzen 30 µl Wassertropfen | | | | |

### 2B: Nachweis des "Recovery"-Effekts mittels Plasmatest

Zum Nachweis des Recovery-Effekts wird der Zustand der Hydrophobie erfasst (siehe 2B1). Dann wird der Zustand der Hydrophilie durch Anwendung eines Plasmas erzwungen (siehe 2B2). Nach der Plasmabehandlung, die den Verlust der Hydrophobie bewirken soll, wird nun in verschiedenen Zeitabständen (sofort, nach einer Stunde (h) und einem Tag (d)) der Zustand der Oberfläche erneut untersucht. Ein Recovery-Effekt zeigt sich dadurch, dass eine Probe vom hydrophilen (in etwa Klasse 5 bis 7) in den hydrophoben Zustand (in etwa Klasse 1 bis 4) übergeht, d.h. wenn der Zustand vor der Plasmatierung in etwa wieder hergestellt wurde. Die Ergebnisse sind in Tabelle 1 erfasst.

2B1: Der augenblickliche Hydrophobiezustand der Proben wird folgendermassen bestimmt:

Eine sich in der Senkrechten befindliche, etwa 100 cm² grosse Probenfläche wird aus einem Abstand von etwa 25 ± 10 cm mittels einer Sprühflasche 20 mal mit Wasser besprüht (1 mal pro Sekunde). Nach weiteren 10 Sekunden wird die Probe betrachtet und der Oberflächenzustand nach folgendem Schema klassifiziert:

| Klassifizierung des Hydrophobiezustands beim Sprühtest | | |
|---|---|---|
| Klasse HK | Eigenschaften | Beschreibung der Effekte |
| 1 | Exzellente Oberflächenhydrophobie | Nur diskrete Tropfen, Randwinkel für die Mehrzahl der Tropfen ist > 80° |
| 2 | Sehr gute Oberflächenhydrophobie | Nur diskrete Tropfen, Randwinkel für die Mehrzahl der Tropfen ist > 50° aber < 80° |
| 3 | Gute Oberflächenhydrophobie | Nur diskrete Tropfen, Randwinkel für die Mehrzahl der Tropfen ist > 20° aber < 50° |
| 4 | Mittlere Oberflächenhydrophobie | Diskrete Tropfen und diskrete benetzte Flächen, die Grösse der einzelnen benetzten Flächen ist < 2 cm² und die gesamte benetzte Fläche ist < 90% |
| 5 | Schwache Oberflächenhydrophobie | Einige diskret benetzte Flächen Flächen > 2 cm², die Grösse der gesamten benetzten Fläche ist < 90% |
| 6 | Schwache Hydrophilie | > 90% der Gesamtfläche sind benetzt, einige unbenetzte Stellen sind jedoch erkennbar |
| 7 | Sehr hydrophile Oberfläche | Kontinuierlicher Wasserfilm über die gesamte untersuchte Fläche |

2B2: Ein Verlust an Hydrophobie, respektive eine Hydrophilie wird durch eine Plasmabehandlung erzwungen. Dazu werden die Prüfplatten mit einer Grösse von 10 x 10 x 0,4 cm³ in eine Plasmakammer vom Typ 440 (Fa. Technics Plasma GmbH), gestellt und folgenden Bedingungen ausgesetzt: Plasmatierungszeit: 2 min, Druck: 2 bis 3 mbar, Gas: Sauerstoff, Leistung: 200 Watt. Diese Behandlung führt zum Verlust der Hydrophobie (siehe Tabelle 1).

### Vergleichende Applikationsbeispiele:

Im Prinzip analog zum Erfindungsbeispiel 1 werden drei Vergleichsbeispiele hergestellt. Im Unterschied zum Erfindungsbeispiel 1, wo zugleich die Polysiloxane 1 und 2 und ein oberflächenakives Reagenz verwendet werden, wird jeweils nur ein Additiv eingesetzt. Die einzelnen Zusammensetzungen und die Eigenschaften der gehärteten Produkte sind in Tabelle 1 zusammengefasst.

**Tabelle 1**

| Vergleichs- und Erfindungsbeispiele | VB 1 | EB 1 | EB 2 | EB3 | VB 2 | VB 3 | VB 4 |
|---|---|---|---|---|---|---|---|
| Zusammensetzung [Gew.-Teile] | | | | | | | |
| Epoxidharz 1 | 100 | 90,5 | 68,55 | 91 | 97 | 94 | 99 |
| ESO | | | 11,43 | | | | |
| ELO | | | 11,43 | | | | |
| Polysiloxan 1 | | 2 | 2 | 2 | 2 | | |
| Polysiloxan 2 | | 5 | 5 | 5 | | 5 | |
| Fluorad | | 1 | 0,1 | 1 | | | 1 |
| BDMA | 0,5 | 0,45 | 0,23 | 0,45 | 0,49 | 0,47 | 0,5 |
| 1-MI | | | 0,45 | | | | |
| Aerosil | | 1,5 | 1,5 | 0,5 | 1 | 1 | |
| Dibenzylidensorbitol | | | | 0,5 | | | |
| Härter 1 | 90 | 81,45 | 80,66 | 82 | 87,3 | 84,6 | 89,1 |
| W 12 EST | 270 | 257,8 | 254,6 | 354,2 | 266,1 | 262,3 | 268,7 |

| Stabilität der Emulsion (Harzkomponenten + Aerosil) | Eine Phase | gut | gut | gut | schlecht | schlecht | Eine Phase |
|---|---|---|---|---|---|---|---|
| Tg (DSC) [°C] | 110 | 110 | 109 | 110 | | | |
| tangens δ (50 Hz) [%] bei 24 °C | 1 | 0,5 | 0,2 | | | | |
| bei 100 °C | 2 | 1,6 | 1,7 | | | | |
| Temperatur bei 8% Verlust [°C] | 125 | 127 | 123 | | | | |
| Zugfestigkeit [MPa] | 90 | 86 | 75 | | | | |
| Bruchdehnung [%] | 1,4 | 1,4 | 1,3 | | | | |
| Biegefestigkeit [MPa] | 125 | 137 | 127 | | | | |
| Randfaserdehnung [%] | 1,3 | 1,6 | 1,7 | | | | |
| Elastizitätsbiegemodul [MPa] | 10500 | 9785 | 8813 | | | | |
| kritischer Spannungsintensitätsfaktor K1C [MPa · (m)1/2] | 2,25 | 2,24 | 2,12 | | | | |
| Bruchenergie G_{1C} [J/m²] | 485 | 465 | 465 | | | | |

| Applikationsbeispiele (AB) | AB 2 | AB 2 | AB 2 | AB2 | AB 2 | AB 2 | AB 2 |
|---|---|---|---|---|---|---|---|
| Transfer-Stufe [TS] nach 50 h | 1 | 3,5 | 3,5 | 4,5 | 2,5 | | 1 |
| nach 500 h | 1 | 4 | 4 | 4,5 | 3,5 | | 1 |
| nach 500 h im 2ten Auftrag | 1 | 4 | 4 | 4,5 | | | |
| Hydrophobie-Klasse [HK] vor Plasma | 3 | 3 | 3 | | 3 | 2 | 2 |
| direkt nach Plasma | 7 | 7 | 7 | | 6 | 6 | 6 |
| 1 h nach Plasma | 7 | 2 | 6 | | 5 | 5 | 7 |
| 1 d nach Plasma | 6 | 1 | 3 | | 5 | 5 | 5 |

| Applikationsbeispiele (AB) | AB 1 | AB 1 | AB1 | AB3 | | | |
|---|---|---|---|---|---|---|---|
| Füllstoffgehalt [%] | 66 | 66 | 66 | 66 | | | |
| Umbruchkraft [N] | 6125 | 5972 | 5509 | Riss- | | | |
| Ausreisskraft [N] | 71,6 | 64,8 | 62 | test | | | |
| - DSC (Differential Scanning Calorimetry) durchgeführt mit Gerät TA 4000 (Fa. Mettler) | | | | | | | |
| - Elektrische Werte (tangens δ) nach DIN 53483, Messfrequenz 50 Hz | | | | | | | |
| - Zugfestigkeit und Bruchfestigkeit nach ISO R527 | | | | | | | |
| - Biegefestigkeit, Randfaserdehnung und Elastizitätsbiegemodul nach ISO 178 | | | | | | | |
| - K1C und G1C: Doppeltorsionsversuch | | | | | | | |

Die Tabelle 1 zeigt:
1) Die Eigenschaften eines unmodifizierten Referenzmaterials:
   Ein Hydrophobie-Transfer wird nicht festgestellt, jedoch eine gute Oberflächenhydrophobie. Nach deren Verlust (durch Plasma) wird die Oberflächenhydrophobie jedoch nicht zurückgebildet.
2) Die Eigenschaften der modifizierten erfindungsgemässen Zusammensetzungen:
   Beispiel 1 zeigt sehr schnell einen guten Hydrophobie-Transfer-Effekt, ebenso auch im zweiten Auftrag der Fremdschicht. Das Material ist im Ausgangszustand recht hydrophob und gewinnt die Hydrophobie nach erzwungenem Verlust durch Plasma sehr schnell wieder zurück und damit einen ausgezeichneten Recovery-Effekt.
   Das zweite Beispiel zeigt praktisch den gleichen Hydrophobie-Transfer-Effekt wie Beispiel 1, jedoch eine weniger gute Oberflächenhydrophobie. Nach deren Verlust (durch Plasma) wird diese zurückgebildet, allerdings weniger schnell als im Beispiel 1. Das dritte Beispiel weisst einen sehr guten und schnell aufbauenden Hydrophobie-Transfer-Effekt auf.
3) Die weiteren Vergleichsbeispiele zeigen, dass der Recovery-Effekt durch die einzelnen Additive alleine nicht beeinflusst werden kann. In allen Fällen wird die Hydrophobie nach erzwungenem Verlust nicht wiedererlangt.

### Applikationsbeispiel 3 (vergleichender Risstest):

Formkörper aus Stahl werden jeweils mit dem erfindungsgemässen Giessharzsystem 3 (siehe EB3) und einem unmodifizierten Giessharzsystem enkapsuliert und das Harz gehärtet. Die Formkörper werden nun in einem Zyklus mit definierten Zeiteinheiten bestimmten, stetig wachsenden, Temperaturenintervallen ausgesetzt und nach jedem Intervall auf eine eventuell eingetretene Rissbildung untersucht.

### Herstellung des unmodifizierten Vergleichsgemisches (analog zu Vergleichsbeispiel 1):

In einem Mischgerät mit Flügelrührwerk werden 1000 g Epoxidharz 1, 900 g Härter 1, 5,0 g BDMA und 3780 g Quarzmehl W 12 EST innerhalb von 30 min bei 60 °C mittels eines Mischers mit Flügelrührwerk vermischt und anschliessend bei ca. 10 mbar kurz entgast.
Die Formkörper werden dem nachfolgend beschriebenen Risstest unterzogen:

### Risstest

In einer Vertiefungen aufweisenden Giessform aus Aluminium werden jeweils 20 stählerne Probekörper der zu vergleichenden Giessharzsysteme durch Anwendung des APG (Automatic Pressure Gelation) Prozesses hergestellt. Bei diesem Prozess wird die flüssige Harzmischung auf 40-60°C erwärmt und unter Vakuum gerührt. Die Harzmischung wird nun unter leichtem Druck von 2-5 bar in die auf 140-150°C erwärmte Giessform eingespritzt. Unter Aufrechterhaltung des Druckes lässt man das Harzsystem in der Giessform innerhalb weniger Minuten gelieren. Jeder Probekörper wird dabei mit einem eingeschlossenen Stahlkörper hergestellt. Nach dem Gelieren werden die Probekörper der Form entnommen und 10 Stunden bei 140°C nachgehärtet. Die Probekörper werden nun einem bestimmten Temperaturprofil ausgesetzt. Das Temperaturprofil besteht aus einer Serie von Zyklen die eine Temperaturobergrenze von 25°C aufweisen, bei der jeweils auch die Untersuchung auf eine vorhandene Rissbildung vorgenommen wird. Die Temperaturuntergrenze wird hingegen mit jedem Zyklus niedriger. Bei jedem Zyklus werden die Proben rasch auf die jeweilige Temperaturunter- respektive -obergrenze gebracht und jeweils einige Stunden bei der jeweiligen Grenztemperatur gehalten. Derjenige Zyklus wird notiert, bei der eine Probe erste Risse zeigt. Die durchschnittliche Risstemperatur eines Harzsystems wird aus der Häufigkeitsverteilung der Rissbildung pro Zyklus ermittelt.
Die Ergebnisse des vergleichenden Risstests des Applikationsbeispiels 3 sind in der folgenden Tabelle aufgelistet:

| Temperatur [°C] / Dauer [Stunden] | EB (20 Proben) Proben mit Riss | VB (20 Proben) Proben mit Riss |
|---|---|---|
| 25/8 | 0 | 0 |
| -10/8 + 25/8 | 0 | 17 |
| -20/16 + 25/8 | 1 | 2 |
| -40/16 + 25/8 | 4 | 1 (20) |
| -60/16 + 25/8 | 7 | - |
| -80/16 + 25/8 | 5 | - |
| -100/16 + 25/8 | 3 (20) | - |

Für das Vergleichssystem wird eine durchschnittliche Risstemperatur von -12°C berechnet, hingegen für das erfindungsgemässe System von -66°C. Somit zeigen überraschenderweise die erfindungsgemässen Systeme im Vergleich zu einem unmodifizierten System, zusätzlich zu ihrem hydrophoben Verhalten, ein deutlich besseres Temperaturwechselverhalten.

## Patentansprüche

1. Zusammensetzung enthaltend
bezogen auf die Gesamtzusammensetzung (a), (b), (c) und (d),
(a) zu 77,0 bis 97,99 Gew.-% ein Epoxidharz,
(b) zu 1,0 bis 10,0 Gew.-% ein OH-terminiertes Polysiloxan,
(c) zu 1,0 bis 10,0 Gew.-% ein cyclisches Polysiloxan und
(d) zu 0,01 bis 3,0 Gew.-% ein nichtionisches, fluoraliphatisches oberflächenaktives Reagenz, wobei die Summe der Komponenten (a), (b), (c) und (d) 100 Gew.-% beträgt.

2. Zusammensetzung nach Anspruch 1, enthaltend als Komponente (a) ein cycloaliphatisches Epoxidharz oder ein Epoxidierungsprodukt eines natürlichen ungesättigten Öls oder eines Derivates davon.

3. Zusammensetzung nach Anspruch 1, enthaltend als Komponente (a) Hexahydrophthalsäurediglycidylester und 3,4-Epoxycyclohexylmethyl-3'4'epoxycyclohexancarboxylat sowie epoxidiertes Sojaöl oder epoxidiertes Leinöl.

4. Zusammensetzung nach Anspruch 1, enthaltend als Komponente (b) ein Polysiloxan der Formel I 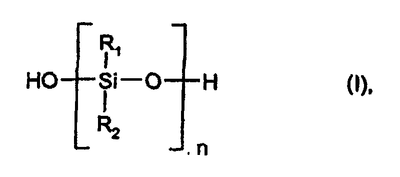 worin R₁ und R₂ unabhängig voneinander C₁-C₁₈-Alkyl, C₅-C₁₄-Aryl oder C₆-C₂₄-Aralkyl bedeuten und n für einen Durchschnittswert von 3 bis 60 steht.

5. Zusammensetzung nach Anspruch 4, enthaltend als Komponente (b) ein Polysiloxan der Formel I, worin R₁ und R₂ unabhängig voneinander Methyl, Ethyl oder Phenyl bedeuten.

6. Zusammensetzung nach Anspruch 5, enthaltend als Komponente (b) ein Polysiloxan der Formel I, worin R₁ und R₂ für Methyl stehen.

7. Zusammensetzung nach Anspruch 1, enthaltend als Komponente (c) ein cyclisches Polysiloxan der Formel II 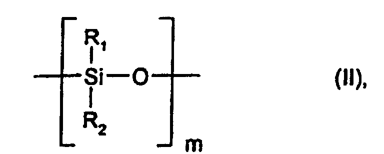 worin R₁ und R₂ unabhängig voneinander C₁-C₁₈-Alkyl, C₅-C₁₄-Aryl oder C₆-C₂₄-Aralkyl bedeuten und m eine ganze Zahl von 3 bis 12 ist.

8. Zusammensetzung nach Anspruch 7, enthaltend als Komponente (c) ein cyclisches Polysiloxan der Formel II, worin R₁ und R₂ unabhängig voneinander Methyl, Ethyl oder Phenyl bedeuten und m eine ganze Zahl von 3 bis 8 ist.

9. Zusammensetzung nach Anspruch 8, enthaltend als Komponente (c) Octamethylcyclotetrasiloxan, Decamethylcyclopentasiloxan, Dodecamethylcyclohexasiloxan oder ein Hydrolysat von Dimethyldichlorsilan.

10. Zusammensetzung nach Anspruch 1, enthaltend als Komponente (d) ein nichtionisches, fluoraliphatisches oberflächenaktives Reagenz der Formel
R_{f}-COO-(CH₂CH₂O)ₘ-R (III)
oder
R_{f}-(CH₂CH₂O)ₘ-R (IV),
wobei m = 1 bis 200, R_{f} ein lineares oder verzweigtes perfluoriertes Alkyl mit 2 bis 22 C-Atomen und R = H, C₁-C₆-Alkyl oder R_{f} bedeutet.

11. Zusammensetzung nach Anspruch 10, enthaltend als Komponente (d) Verbindungen der Formeln (III) oder (IV), bei denen die Molmasse entsprechend der theoretischen Summenformel 300 bis 8000 beträgt.

12. Zusammensetzung nach Anspruch 11, enthaltend als Komponente (d) 1,1,2,2-Teträhydroperfluoroctanol oder R_{f} -COO-(CH₂CH₂O)ₘ-R, wobei R_{f} ein lineares perfluoriertes Alkyl mit 16-18 C-Atomen, m = 110-130 und R = H bedeutet.

13. Zusammensetzung nach Anspruch 1, enthaltend zusätzlich als weitere Komponente (g) Emulgatoren oder auch Verdickungsmittel.

14. Zusammensetzung nach Anspruch 13, enthaltend als Komponente (g), 0,01 bis 3,5 Gew.-%, bezogen auf die Summe der Komponenten (a) bis (d), hochdisperse, hydrophile, unbehandelte Kieselsäure.

15. Zusammensetzung nach Anspruch 1 oder 13 oder 14, enthaltend zusätzlich ein Härtungsmittel.

16. Zusammensetzung nach Anspruch 15 bei der das Härtungsmittel ausgewählt ist aus einem Polycarbonsäureanhydrid (e) oder aus einem Polycarbonsäureanhydrid (e) zusammen mit einem Beschleuniger (f).

17. Zusammensetzung nach Anspruch 15 bei der das Härtungsmittel ein Initiatorsystem für die kationische Polymerisation ist.

18. Zusammensetzung nach einem der Ansprüche 1 oder 13 bis 17 welche Füllstoffe enthält.

19. Zusammensetzung nach Anspruch 18 bei der als Füllstoff Quarzmehl, silanisiertes Quarzmehl, Aluminiumhydroxid oder auch Aluminiumoxid enhalten ist.

20. Vemetzte Produkte erhältlich durch Härtung einer Zusammensetzung gemäss einem der Ansprüche 1 bis 19.

21. Elektrisches Isolationsmaterial gemäss Anspruch 20.

## Claims

1. A composition comprising,
based on the total composition (a), (b), (c) and (d),
(a) from 77.0 to 97.99 % by weight of an epoxy resin,
(b) from 1.0 to 10.0 % by weight of an OH-terminated polysiloxane,
(c) from 1.0 to 10.0 % by weight of a cyclic polysiloxane and
(d) from 0.01 to 3.0 % by weight of a non-ionic, fluoroaliphatic surface-active reagent, the sum of components (a), (b), (c) and (d) being 100 % by weight.

2. A composition according to claim 1, comprising as component (a) a cycloaliphatic epoxy resin or an epoxidation product of a natural unsaturated oil or a derivative thereof.

3. A composition according to claim 1, comprising as component (a) hexahydrophthalic acid diglycidyl ester and 3,4-epoxycyclohexylmethyl 3',4'-epoxycyclohexanecarboxylate as well as epoxidised soybean oil or epoxidised linseed oil.

4. A composition according to claim 1, comprising as component (b) a polysiloxane of formula I 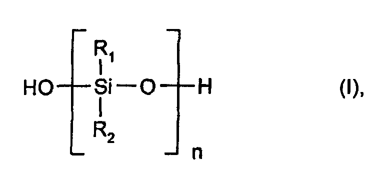 wherein R₁ and R₂ are each independently of the other C₁-C₁₈alkyl, C₅-C₁₄aryl or C₆-C₂₄aralkyl and n is an average value of from 3 to 60.

5. A composition according to claim 4, comprising as component (b) a polysiloxane of formula I wherein R₁ and R₂ are each independently of the other methyl, ethyl or phenyl.

6. A composition according to claim 5, comprising as component (b) a polysiloxane of formula I wherein R₁ and R₂ are methyl.

7. A composition according to claim 1, comprising as component (c) a cyclic polysiloxane of formula II 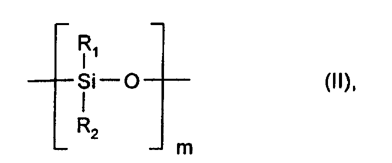 wherein R₁ and R₂ are each independently of the other C₁-C₁₈alkyl, C₅-C₁₄aryl or C₆-C₂₄-aralkyl and m is an integer from 3 to 12.

8. A composition according to claim 7, comprising as component (c) a cyclic polysiloxane of formula II wherein R₁ and R₂ are each independently of the other methyl, ethyl or phenyl and m is an integer from 3 to 8.

9. A composition according to claim 8, comprising as component (c) octamethylcyclotetrasiloxane, decamethylcyclopentasiloxane, dodecamethylcyclohexasiloxane or a hydrolysate of dimethyldichlorosilane.

10. A composition according to claim 1, comprising as component (d) a non-ionic, fluoroaliphatic surface-active reagent of formula
R_{f} -COO-(CH₂CH₂O)ₘ-R (III)
or
R_{f}-(CH₂CH₂O)ₘ-R (IV),
wherein m = 1 to 200, R_{f} is a linear or branched perfluorinated alkyl having from 2 to 22 carbon atoms and R = H, C₁-C₆alkyl or R_{f}.

11. A composition according to claim 10, comprising as component (d) compounds of formula (III) or (IV) in which the molecular mass according to the theoretical empirical formula is from 300 to 8000.

12. A composition according to claim 11, comprising as component (d) 1,1,2,2-tetrahydroperfluorooctanol or R_{f} -COO-(CH₂CH₂O)ₘ-R, wherein R_{f} is a linear perfluorinated alkyl having from 16 to 18 carbon atoms, m = 110-130 and R = H.

13. A composition according to claim 1, additionally comprising as further component (g) emulsifiers or thickeners.

14. A composition according to claim 13, comprising as component (g) from 0.01 to 3.5 % by weight, based on the sum of components (a) to (d), of highly dispersed, hydrophilic, untreated silicic acid.

15. A composition according to claim 1 or 13 or 14, additionally comprising a curing agent.

16. A composition according to claim 15, wherein the curing agent is selected from a polycarboxylic anhydride (e) or from a polycarboxylic anhydride (e) together with an accelerator (f).

17. A composition according to claim 15, wherein the curing agent is an initiator system for cationic polymerisation.

18. A composition according to any one of claims 1 or 13 to 17, which comprises fillers.

19. A composition according to claim 18, which comprises as filler quartz powder, silanised quartz powder, aluminium hydroxide or aluminium oxide.

20. A crosslinked product obtainable by curing a composition according to any one of claims 1 to 19.

21. An electrical insulating material according to claim 20.

## Revendications

1. Composition contenant par rapport à la composition totale (a), (b), (c) et (d)
(a) de 77,0 à 97,99 % en poids d'une résine époxyde,
(b) de 1,0 à 10,0 % en poids d'un polysiloxane avec des groupes terminaux OH,
(c) de 1,0 à 10,0 % en poids d'un polysiloxane cyclique et
(d) de 0,01 à 3,0 % en poids d'un réactif tensio-actif non ionique, fluoraliphatique.

2. Composition selon la revendication 1, contenant en tant que composant (a) une résine époxyde cycloaliphatique ou un produit d'époxydation d'une huile naturelle insaturée ou un dérivé de celui-ci.

3. Composition selon la revendication 1, contenant en tant que composant (a), l'hexahydrophtalate de diglycidyle et le 3',4'-époxycyclohexanecarboxylate de 3,4-époxy-cyclohexylméthyle ainsi que l'huile de soja époxydée ou l'huile de lin époxydée.

4. Composition selon la revendication 1, contenant en tant que composant (b) un polysiloxane de formule I 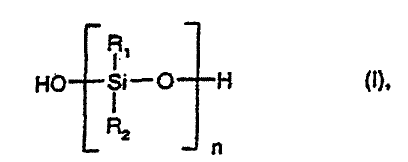 où R₁ et R₂ représentent, indépendamment l'un de l'autre, des groupes alkyle en C₁-C₁₈, aryle en C₅-C₁₄ ou aralkyle en C₆-C₂₄ et n possède une valeur moyenne de 3 à 60.

5. Composition selon la revendication 4, contenant en tant que composant (b) un polysiloxane de formule I, où R₁ et R₂ représentent, indépendamment l'un de l'autre, des groupes méthyle, éthyle ou phényle.

6. Composition selon la revendication 5, contenant en tant que composant (b) un polysiloxane de formule I, où R₁ et R₂ représentent un groupe méthyle.

7. Composition selon la revendication 1, contenant en tant que composant (c) un polysiloxane cyclique de formule II 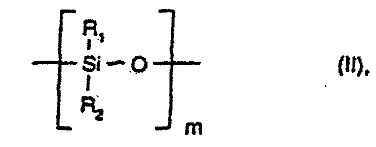 où R₁ et R₂ représentent, indépendamment l'un de l'autre, des groupes alkyle en C₁-C₁₈, aryle en C₅-C₁₄ ou aralkyle en C₆-C₂₄ et m est un entier de 3 à 12.

8. Composition selon la revendication 7, contenant en tant que composant (c) un polysiloxane cyclique de formule II, où R₁ et R₂ représentent, indépendamment l'un de l'autre, des groupes méthyle, éthyle ou phényle et m est un entier de 3 à 8.

9. Composition selon la revendication 8, contenant en tant que composant (c) l'octaméthylcyclotétrasiloxane, le décaméthylcyclopentasiloxane, le dodécaméthylcyclohexasiloxane ou un produit d'hydrolyse de diméthylchlorosilane.

10. Composition selon la revendication 1, contenant en tant que composant (d) un réactif non ionique, fluoraliphatique, tensio-actif, de formule
**R**_{**f**}**-COO-(CH**_{**2**}**CH**_{**2**}**O)**_{**m**}**-R (III)**
ou
**R**_{**f**}**-(CH**_{**2**}**CH**_{**2**}**O)**_{**m**}**-R (IV),**
m = 1 à 200, R_{f} représente un groupe alkyle perfluoré, linéaire ou ramifié, présentant 2 à 22 atomes de carbone et R = H, alkyle en C₁-C₆ ou R_{f}.

11. Composition selon la revendication 10, contenant en tant que composant (d) des composés de formule (III) ou (IV), où la masse molaire conformément à la formule sommaire théorique est de 300 à 8000.

12. Composition selon la revendication 11, contenant en tant que composant (d) le 1,1,2,2-tétrahydroperfluorooctanol ou R_{f}-COO-(CH₂CH₂O)ₘ-R, où R_{f} représente un groupe alkyle linéaire, perfluoré, présentant 16 à 18 atomes de carbone, m = 110-130 et R = H.

13. Composition selon la revendication 1, contenant en tant que composant (g) supplémentaire des émulsionannts ou aussi des épaississants.

14. Composition selon la revendication 13, contenant en tant que composant (g), de 0,01 à 3,5 % en poids, par rapport à la somme des composants (a) à (d) d'acide silicique non traité, hydrophile, hautement dispersé.

15. Composition selon la revendication 1 ou 13 ou 14, contenant en plus un durcisseur.

16. Composition selon la revendication 15, où le durcisseur est choisi parmi un anhydride d'acide polycarboxylique (e) ou un anhydride d'acide polycarboxylique (e) conjointement avec un accélérateur (f).

17. Composition selon la revendication 15, où le durcisseur est un système d'amorceur pour la polymérisation cationique.

18. Composition selon la revendication 1 ou 13 à 17, contenant des charges.

19. Composition selon la revendication 18, contenant en tant que charge la farine de quartz, la farine de quartz silanisée, l'hydroxyde d'aluminium ou aussi un oxyde d'aluminium.

20. Produits réticulés que l'on peut obtenir par durcissement d'une composition selon l'une des revendications 1 à 19.

21. Matériau isolant électrique selon la revendication 20.
